Europäisches Patentamt

European Patent Office

Office européen des brevets

(11) Veröffentlichungsnummer: **0 177 787 B1**

(12) **EUROPÄISCHE PATENTSCHRIFT**

(45) Veröffentlichungstag der Patentschrift: **26.02.92**

(21) Anmeldenummer: **85111456.1**

(22) Anmeldetag: **11.09.85**

(51) Int. Cl.⁵: **A22B  3/00**

㉝ **54** Vorrichtung zum Betäuben von Schlachttieren, insbesondere Schweinen.

(30) Priorität: **20.09.84 DE 8427758 U**

(43) Veröffentlichungstag der Anmeldung:
**16.04.86 Patentblatt  86/16**

(45) Bekanntmachung des Hinweises auf die
Patenterteilung:
**26.02.92 Patentblatt  92/09**

(84) Benannte Vertragsstaaten:
**AT BE CH DE FR GB IT LI NL SE**

(56) Entgegenhaltungen:
**DE-A- 3 029 037
DE-C- 666 024
NL-A- 7 514 368
NL-A- 7 903 682
US-A- 3 118 174**

(73) Patentinhaber: **Banss Maschinenfabrik GmbH
& Co. KG
Industriestrasse 4
W-3560 Biedenkopf(DE)**

(72) Erfinder: **Rademacher, Rolf
Schillerweg 6
W-3560 Biedenkopf(DE)**
Erfinder: **Kaufmann, Siegfried
Hauptstrasse 19
W-3563 Dautphetal(DE)**

(74) Vertreter: **Klunker . Schmitt-Nilson . Hirsch
Winzererstrasse 106
W-8000 München 40(DE)**

# Beschreibung

Die Erfindung bezieht sich auf eine Vorrichtung zum Betäuben von Schlachttieren, insbesondere Schweinen, mit einem Restrainer, mit dem Schlachttiere in vereinzelter Reihe bewegungseingeschränkt förderbar sind, mit einer Betäubungseinrichtung, mit der das jeweils zu betäubende, im Restrainer gehaltene Schlachttier betäubt wird, und mit einer am Eingang des Restrainers angeordneten, automatisch betätigbaren, mechanischen Sperre, deren Betätigung abhängig ist vom Vorhandensein eines Schlachttieres im Restrainer.

"Restrainer" ist ein in der Schlachttechnik üblicher Fachbegriff und bezeichnet eine Fördereinrichtung, bei der die geförderten Schlachttiere bewegungseingeschränkt gehalten sind. Die übliche Bauweise eines Restrainers sind zwei im Querschnitt zur Förderrichtung gesehen V-förmig gestellte Förderbänder. Die geförderten Schlachttiere sinken durch ihr Eigengewicht im V-förmigen Aufnahmeraum des Restrainers so weit nach unten, daß sie unten-seitlich zusammengedrückt werden und dadurch weitgehend an Eigenbewegungen gehindert sind.

Betäubungsvorrichtungen für Schweine, die mit Restrainern arbeiten, sind bekannt. Wenn man in einem Restrainer hängende Schlachttiere betäuben will, ist es erforderlich, daß die Schlachttiere der Reihe nach vereinzelt, d.h. mit zumindest geringem Abstand jeweils zwischen dem hinteren Ende eines Schlachttiers und jeweils dem vorderen Ende eines nachfolgenden Schlachttiers in den Restrainer gelangen, damit alle Schlachttiere ordnungsgemäß im Restrainer immobilisiert werden und die eigentliche Betäubungseinrichtung der Reihe nach mit jedem einzelnen, nahezu in gleicher Immobilisierungslage befindlichen Schlachttier in Einwirkung treten kann. Um dies zu erreichen, hat man bisher z.B. mit zwei hintereinander geschalteten Restrainern gearbeitet, wobei der in Förderrichtung vordere Restrainer schneller als der in Förderrichtung hintere Restrainer läuft.

Dem hinteren Restrainer können die Schlachttiere praktisch beliebig zugetrieben werden, ohne daß es auf nahezu lagegleiche Immobilisierung oder Abstandshaltung in diesem Restrainer ankäme. Bei der Übergabe zum vorderen Restrainer ergibt sich durch dessen höhere Fördergeschwindigkeit ein Vereinzelungseffekt. Diese Bauweise erfordert jedoch viel Raum. Außerdem ist die Übergabe von dem langsameren zu dem schnelleren Restrainer für die Schlachttiere schmerzhaft.

Aus dem Dokument NL-A-7 903 682 ist eine Betäubungsvorrichtung zur elektrischen Betäubung von Schlachttieren bekannt, die im wesentlichen aus einem Treibgang mit daran anschließend angeordnetem Restrainer besteht, der zum Betäuben der Schlachttiere eine Betäubungseinrichtung aufweist. Um sicher zu stellen, daß die Schlachttiere vereinzelt in den Restrainer gelangen, ist im Endbereich des Treibgangs vor dem Eingang des Restrainer ein Schieber mit Sperrfunktion angeordnet, der jeweils nur einzelnen Schlachttieren den Zutritt zum Restrainer ermöglicht. Die Betätigung dieser Sperre erfolgt in Abhängigkeit von der Betäubungseinrichtung. Zu diesem Zweck weist die Betäubungseinrichtung zwei voneinander beabstandete Elektroden auf, die durch gleichzeitigen Kontakt mit einem Schlachttier kurzgeschlossen werden. Durch den Kurzschluß zwischen den Elektroden wird das Öffnen der Sperre für das nächste Schlachttier bewirkt. Der Kurzschluß der Elektroden und damit die Einwirkung der Betäubungseinrichtung auf das Schlachttier dauern so lange an, wie das Schlachttier mit den beiden Elektroden in Kontakt ist.

Bezogen auf die vorstehend an erster Stelle genannte, bekannte Vorrichtung liegt der Erfindung die Aufgabe zugrunde, eine Betäubungsvorrichtung verfügbar zu machen, die weniger Raum benötigt und für die Schlachttiere schonender ist und dennoch eine Schlachttierförderung in sicher vereinzelter Reihe ermöglicht. Bezogen auf die vorstehend an zweiter Stelle genannte, bekannte Betäubungsvorrichtung soll die Betätigung der Sperre unabhängig von dem Kontakt der Betäubungselektrode mit dem Schlachttier erfolgen.

Erfindungsgemäß ist die Betäubungsvorrichtung dadurch gekennzeichnet, daß zur Betätigung der Sperre ein von der Betäubungseinrichtung unabhängiger Fühler vorgesehen ist, der bei einer ersten Position eines Schlachttiers in der Restrainer-Förderstrecke die Schließung der Sperre auslöst und bei einer zweiten Position des Schlachttiers in der Restrainer-Förderstrecke die Öffnung der Sperre auslöst.

Bei der erfindungsgemäßen Vorrichtung ist es überflüssig, zwei Restrainer hintereinander und eine Übergabe der Schlachttiere zwischen den zwei Restrainern vorzusehen.

Bei der erfindungsgemäßen Vorrichtung kann der Restrainer, wie auch bisher üblich, mit Gliederbändern aufgebaut sein. Es kommt jedoch auch ein Aufbau mit flächigen Förderbändern aus Gummi in Betracht, die die Gefahr des Einklemmens von Teilen der Schlachttiere zwischen den Gliedern der Förderbänder ausschließen. Als Betäubungseinrichtung ist eine elektrische Betäubungseinrichtung (automatisch oder manuell bedient oder Handzange) bevorzugt; es kann jedoch stattdessen auch eine Betäubungseinrichtung zur Betäubung mittels mechanischen Schlags, eine Schuß-Betäubungseinrichtung oder eine Gas-Betäubungseinrichtung eingesetzt werden. Vorzugsweise bewegt sich die Betäubungseinrichtung, unter synchronem Eigenantrieb oder mitgenommen von der Bewegung des jeweiligen geförderten Schlachttiers, etwa mit gleicher Geschwindigkeit wie das jeweilige geförderte Schlachttier während des Betäubungsvorgangs vorwärts. Dannach erfolgt eine möglichst rasche Zurückbewegung, damit die Betäubungseinrichtung mit dem nächsten Schlachttier in Einwirkung treten kann. Man kann aber auch mit relativ kurzer Einwirkungszeit der Betäubungseinrichtung auf das jeweilige Schlachttier arbeiten und infolgedessen die Betäubungseinrichtung nicht mitbewegen. Eine weitere Möglichkeit besteht darin, den Restrainer jeweils kurzzeitig anzuhalten.

Vorzugsweise ist die Sperre durch eine pneumatische oder hydraulische Zylinder-Kolben-Einheit für ihre Bewegungen betätigt. Es kommen aber auch elektrische Betätigung oder mechanische Betätigung in Frage.

Die Sperre ist vorzugsweise als Stange oder Anordnung mehrerer Stangen ausgebildet. Aber auch eine Ausbildung als Sperrwand ist möglich.

Die Bewegungsrichtung der Sperre beim Öffnen und Schließen kann je nach den Gegebenheiten recht frei gewählt werden. Räumlich und vom Bauaufwand her besonders günstig ist jedoch eine horizontale Bewegungsrichtung.

Für die Funktion der Sperre kommt es darauf an, daß jeweils dasjenige Schlachttier, das als nächstes in den Restrainer gelangen soll, solange zurückgehalten wird, bis das davor befindliche Schlachttier im Restrainer ein Stück weitergefördert ist. Das am Betreten des Restrainers zu hindernde Schlachttier kann vor dem Kopf, im Halsbereich an den Füßen oder sogar durch seitliches Einklemmen am Leib oder an der Hüfte gegen Weitergehen blockiert werden. Besonders bevorzugt ist eine Blockierung am Kopf, die sich besonders günstig durch eine oder mehrere Stangen bewerkstelligen läßt.

Im Interesse einer möglichst hohen Stundenleistung der Vorrichtung und eines möglichst glatten Betriebsablaufs ist es bevorzugt, daß die Restrainerbewegung ununterbrochen ist.

Für den rauhen Schlachthofbetrieb ist ein mechanischer Fühler besonders günstig, insbesondere in Form eines schwenkbaren Hebels. Dieser Hebel kann insbesondere einen elektrischen Schalter oder ein Ventil betätigen, der bzw. das seinerseits den Sperrenantrieb in die Öffnungsrichtung oder in die Schließrichtung aktiviert. Eine konstruktiv besonders günstige Lösung besteht darin, einen auf dem Rücken des jeweiligen Schlachttiers entlanggleitenden Hebel als mechanischen Fühler vorzusehen. Eine weitere Möglichkeit ist insbesondere der Einbau einer Lichtschranke als Fühler. Die Betäubungseinrichtung kann automatisch arbeitend gestaltet sein.

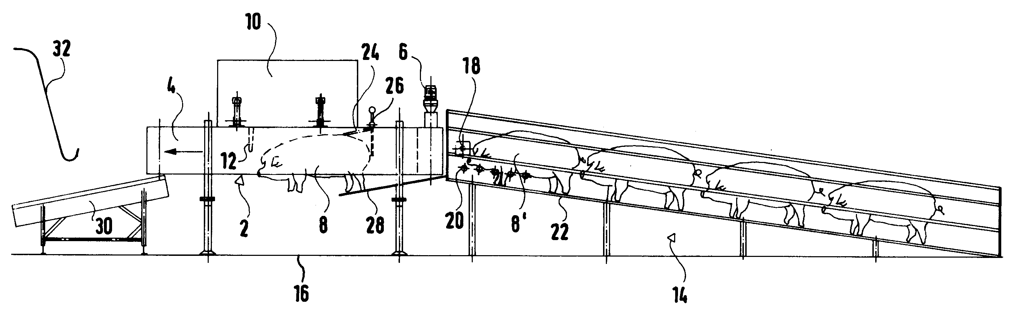

Die Erfindung wird im folgenden anhand eines zeichnerisch dargestellten Ausführungsbeispiels noch näher erläutert. Die Zeichnung zeigt eine Betäubungsvorrichtung in Seitenansicht und teilweise schematisiert.

Etwa in der Mitte der Zeichnung erkennt man einen Restrainer 2, wobei die V-förmige Stellung der beiden endlosen Förderbänder 4 wegen der Blickrichtung von der Seite her nicht erkennbar ist. Man erkennt jedoch den elektrischen Antriebsmotor 6 eines Förderbands.

Oben auf dem Restrainer 2 oberhalb von dessen Aufnahmeraum für Schlachttierkörper 8, im dargestellten Ausführungsbeispiel Schweine, ist eine elektrische Betäubungseinrichtung 10 angebracht. Die Betäubungseinrichtung 10 weist einen nicht im einzelnen dargestellten Schlitten auf, der in Förderrichtung des Restrainers 2 vorwärts und rückwärts bewegbar ist. Die Betäubungseinrichtung 10 weist ein nach unten in den Aufnahmeraum des Restrainers 2 ragendes Paar von Elektroden 12 auf. Diese treten mit dem Kopf oder dem Halsbereich des jeweils zu betäubenden Schweins 8 in Kontakt. Der genannte Schlitten bewegt sich dann eine Zeitlang etwa synchron mit dem Schlachttier mit. Nach der erforderlichen Einwirkungsdauer des elektrischen Stroms wird der Schlitten rasch entgegen der Förderrichtung des Restrainers 2 zurückgefahren, damit er wieder am Ausgangspunkt seiner Bewegung ist, wenn das nächste Schlachttier 8' im Restrainer 2 zur Betäubung herankommt. Die Elektroden 12 werden sinnvollerweise beim Zurückfahren des Schlittens der Betäubungseinrichtung 10 nach oben aus dem Aufnahmeraum des Restrainers 2, beispielsweise schwenkend, herausgebracht. Die Förderrichtung des Restrainers 2 ist in der Zeichnung von rechts nach links.

Rechts in der Zeichnung ist dem Restrainer 2 ein Treibgang 14 vorgesetzt. Da sich die Förderbänder 4 des Restrainers 2 ein Stück oberhalb des Bodens 16 des Schlachthofs befinden, führt der Treibgang 14 schräg aufwärts zum Restrainer 2. Am Ende des Treibgangs 14 kurz vor dem Restrainer 2 ist eine Querstange 20 vorgesehen. Diese Stange 20 ist mittels einer hydraulischen Zylinder-Kolben-Einheit, die senkrecht zur Zeichenebene hinter dieser liegt und daher in der Zeichnung nicht erkennbar ist, horizontal derart hin und her bewegbar, daß sie entweder eine den Treibgang 14 quer durchsetzende Schließstellung oder eine den Treibgang 14 freigebende Öffnungsstellung einnimmt. Die Stange 20 ist in einer derartigen Höhe oberhalb des Treibgangsbodens 22 angeordnet, daß das nachfolgende Schwein 8' an seinem Kopf zurückgehalten wird. In einer geringeren Höhe über dem Treibgangboden 22 sind unmittelbar vor der Sperren-Stange 20 quer fünf Stangen 18 in Bewegungsrichtung der Schweine 8 hintereinander mit Abstand angeordnet. Diese Stangen 18 zwingen jedes Schwein 8 zu einer Trippelschrittbewegung und daher zu einer langsamen Annäherung an die Sperre 20.

In der Zeichnung rechts von der Betäubungseinrichtung 10 ist ein Hebel 24 mit waagerechter Schwenkachse 26, die etwa auf der Höhe des oberen Randes der Förderbänder 4 liegt, vorgesehen. Der Restrainer 2 hat im Anfangsbereich einen nach vorne abfallenden Boden 28, so daß ein in den Restrainer 2 hineinlaufendes Schwein den Boden unter den Füßen verliert und vom Restrainer 2 gegriffen und weitergefördert wird. Kurz nachdem ein zu betäubendes Schwein 8 von dem Restrainer 2 gegriffen ist, stößt es mit seinem Kopf oder seinem vorderen Rückenbereich gegen den Hebel 24 und hebt ihn an. Dadurch wird ein elektrischer Schalter oder ein Hyraulikventil (nicht gezeichnet) betätigt, wodurch die Zylinder-Kolben-Einheit aktiviert wird und die Stange 20 in die Schließstellung bewegt. Dadurch wird das nachfolgende Schwein 8' am Ende des Treibgangs 14 gegen Weitergehen blockiert. Während der Weiterförderung des Schweins 8 im Restrainer 2 gleitet der Hebel 24 auf dem Rücken des Schweins 8 entlang bis zum hinteren Schweineende. Dort schwenkt der Hebel 24 nach unten, wodurch der Antrieb der Stange 20 in Öffnungsrichtung aktiviert wird. Jetzt kann das nachfolgende Schwein 8' vor zum Restrainer 2 laufen oder dorthin getrieben werden. Der beschriebene Zyklus wiederholt sich.

Am Ende des Restrainers 2 werden die betäubten Schweine 8 auf eine Rutsche 30 abgegeben und dort an einem Hinterbein aufgehängt. In diesem aufgehängten Zustand werden die Schweine zum Abstechen gefördert, wobei in der Zeichnung der sogenannte Stechelevator 32 zum Schräg-aufwärts-Transportieren des jeweiligen Schweins 8 schematisch dargestellt ist.

Der Abstand zwischen der Schwenkachse 26 des Hebels 24 und der Stange 20 ist etwa so groß oder etwas kleiner als eine mittlere Schweinelänge, damit das nachfolgende Schwein 8' sicher gegen Weitergehen blockiert wird, wenn das vorangehende Schwein 8 den Hebel 24 aufwärts schwenkend betätigt.

**Patentansprüche**

1.  Vorrichtung zum Betäuben von Schlachttieren, insbesondere Schweinen, mit einem Restrainer, mit dem Schlachttiere in vereinzelter Reihe bewegungseingeschränkt förderbar sind, mit einer Betäubungseinrichtung, mit der das jeweils zu betäubende, im Restrainer gehaltene Schlachttier betäubt wird, und mit einer am Eingang des Restrainers angeordneten, automatisch betätigten, mechanischen Sperre, deren Betätigung abhängig ist vom Vorhandensein eines Schlachttieres im Restrainer,

dadurch gekennzeichnet,
daß zur Betätigung der Sperre (18) ein von der Betäubungseinrichtung unabhängiger Fühler (24) vorgesehen ist, der bei einer ersten Position eines Schlachttieres (8) in der Restrainer-Förderstrecke die Schließung der Sperre (18) auslöst und bei einer zweiten Position des Schlachttieres (8) in der Restrainer-Förderstrecke die Öffnung der Sperre (18) auslöst.

2.  Vorrichtung nach Anspruch 1,
dadurch gekennzeichnet,
daß als Fühler ein schwenkbarer Hebel (24) vorgesehen ist, der vorzugsweise einen elektrischen Schalter oder ein Ventil betätigt.

3.  Vorrichtung nach Anspruch 2,
dadurch gekennzeichnet,
daß der Hebel (24) auf dem Rücken des jeweiligen Schlachttiers (8) entlanggleitet und in der derart aufwärts geschwenkten Lage die Sperre (18) in die Schließstellung steuert.

4.  Vorrichtung nach Anspruch 1,
dadurch gekennzeichnet,
daß die Sperre (18) durch eine Zylinderkolbeneinheit betätigt ist.

5.  Vorrichtung nach Anspruch 1 sowie einem oder mehreren der weiteren Ansprüche,
dadurch gekennzeichnet,
daß die Sperre (18) als Stange oder Anordnung mehrerer Stangen ausgebildet ist.

6.  Vorrichtung nach einem der Ansprüche 1 sowie einem oder mehreren der weiteren Ansprüche,
dadurch gekennzeichnet,
daß die Bewegungsrichtung der Sperre (18) im wesentlichen horizontal ist.

7.  Vorrichtung nach einem der Ansprüche 1 sowie einem oder mehreren der weiteren Ansprüche,
dadurch gekennzeichnet,
daß die Sperre (18) in der Schließstellung das jeweilige Schlachttier (8) am Kopf gegen Weitergehen blockiert.

8.  Vorrichtung nach einem der Ansprüche 1 sowie einem oder mehreren der weiteren Ansprüche,
dadurch gekennzeichnet,
daß der Restrainer (2) kontinuierlich läuft.

**Claims**

1.  A device for stunning slaughter animals, in particular hogs, comprising a restrainer adapted to convey slaughter animals in a singularized series and with restricted mobility, a stunning means for stunning the particular slaughter animal held in the restrainer and to be stunned, and an automatically actuated mechanical barrier which is disposed at the entrance to the restrainer and actuation of which is dependent upon the presence of a slaughter animal in the restrainer, **characterized** in that a feeler (24) independent of the stunning means is provided for actuation of the barrier (18), said feeler triggering closure of the barrier (18) at a first position of a slaughter animal (8) in the restrainer conveying path and triggering opening of the barrier (18) at a second position of the slaugher animal (8) in the restrainer conveying path.

2.  A device according to claim 1,
    characterized in that the feeler is provided in the form of a pivotable lever (24) which preferably actuates an electrical switch or a valve.

3.  A device according to claim 2,
    characterized in that the lever (24) slides along the back of the particular slaughter animal (8) and in this upwardly pivoted position controls the barrier (18) to assume its closing position.

4.  A device according to claim 1,
    characterized in that the barrier (18) is actuated by a piston and cylinder unit.

5.  A device according to claim 1 as well as one or more of the further claims,
    characterized in that the barrier (18) is in the form of a rod or assembly of several rods.

6.  A device according to any one of claims 1 as well as one or more of the further claims,
    characterized in that the direction of movement of the barrier (18) is substantially horizontal.

7.  A device according to any one of claims 1 as well as one or more of the further claims,
    characterized in that the barrier (18) in the closing position blocks the respective slaughter animal (8) at its head against walking on.

8.  A device according to any one of claims 1 as well as one or more of the further claims,
    characterized in that the restrainer (2) operates continuously.

**Revendications**

1.  Dispositif pour anesthésier des animaux à abattre, en particulier des porcs, avec un rétenteur, à l'aide duquel on peut véhiculer les animaux à abattre en file par un, en limitant leurs mouvements, avec un dispositif d'anesthésie, à l'aide duquel chaque animal à abattre devant être anesthésié maintenu dans le rétenteur est anesthésié, et avec une barrière mécanique, disposée à l'entrée du rétenteur, actionnée automatiquement, dont l'actionnement dépend de la présence d'un animal à abattre dans le rétenteur,

caractérisé en ce que

pour assurer l'actionnement de la barrière (18) est prévu un capteur (24) indépendant du dispositif d'anesthésie, qui, dans une première position d'un animal à abattre (8) dans la section de transport du rétenteur, déclenche la fermeture de la barrière (18) et, dans une deuxième position de l'animal à abattre (8) dans la section de transport du rétenteur, déclenche l'ouverture de la barrière (18).

2.  Dispositif selon la revendication 1, caractérisé en ce que l'on prévoit comme capteur un levier pivotant (24) qui actionne de préférence un interrupteur électrique ou une soupape.

3.  Dispositif selon la revendication 2, caractérisé en ce que le levier (24) glisse sur le dos de l'animal à abattre (8) et, une fois arrivé de ce fait en position relevée, commande la mise en position de fermeture de la barrière (18).

4.  Dispositif selon la revendication 1, caractérisé en ce que la barrière (18) est actionnée par un ensemble à piston et cylindre.

5.  Dispositif selon la revendication 1, ainsi qu'une ou plusieurs des autres revendications, caractérisé en ce que la barrière (18) est réalisée sous forme de barre ou d'agencement de plusieurs barres.

6.  Dispositif selon la revendication 1, ainsi qu'une ou plusieurs des autres revendications, caractérisé en ce que le sens de déplacement de la barrière (18) est pratiquement horizontal.

7.  Dispositif selon la revendication 1, ainsi qu'une ou plusieurs des autres revendications, caractérisé en ce qu'en position de fermeture, la barrière (18) bloque l'animal à abattre (8) à la tête, pour l'empêcher de continuer à se déplacer.

8.  Dispositif selon la revendication 1, ainsi qu'une ou plusieurs des autres revendications, caractérisé en ce que le rétenteur (2) fonctionne de façon continue.